# EUROPÄISCHE PATENTSCHRIFT

(11) **EP 0 996 595 B1**
(45) Veröffentlichungstag und Bekanntmachung des Hinweises auf die Patenterteilung: **25.07.2001**
(21) Anmeldenummer: 98936087.0
(22) Anmeldetag: 30.05.1998
(51) Int. Cl.: C02F 3/28, C02F 11/18, B01J 10/00

(54) **VERFAHREN ZUR BEHANDLUNG BIOGENER RESTMASSEN**
METHOD FOR TREATING BIOGENIC RESIDUES
PROCEDE POUR LE TRAITEMENT DE MATIERES RESIDUELLES BIOGENES

(30) Priorität: 05.06.1997 DE 19723510
(43) Veröffentlichungstag der Anmeldung: 03.05.2000
(73) Patentinhaber: ATZ-EVUS Applikations- und Technikzentrum für Energieverfahrens-, Umwelt- und Strömungstechnik, 92237 Sulzbach-Rosenberg (DE)
(72) Erfinder: BISCHOF, Franz, D-92237 Sulzbach-Rosenberg (DE); SCHNEIDER, Ralf, D-90402 Nürnberg (DE); JUNG, Rolf, D-91710 Gunzenhausen (DE); GENENGER, Bernd, D-91077 Hetzles (DE)
(74) Vertreter: Gassner, Wolfgang, Dr.
(86) Internationale Anmeldenummer: DE9801507
(87) Internationale Veröffentlichungsnummer: WO9855408

(56) Entgegenhaltungen:
- EP-A- 0 007 489
- EP-A- 0 078 919
- EP-A- 0 118 621
- EP-A- 0 377 832
- DE-A- 4 419 621
- US-A- 5 409 617

## Beschreibung

Die Erfindung betrifft ein Verfahren nach dem Oberbegriff des Anspruchs 1. Sie betrifft ferner eine Vorrichtung nach dem Oberbegriff des Anspruchs 19.

Ein solches Verfahren und eine solche Vorrichtung sind aus der DE 44 03 391 A1 bekannt. Danach wird die Temperatur-Druck-Hydrolyse (TDH) in einem Rohr-Reaktor durchgeführt. Zur Erzielung eines nennenswerten Durchsatzes sind erhebliche Baugrößen für einen solchen Reaktor erforderlich. Bei einer Zufuhrrate von bspw. 1,7 t biogener Restmasse/Stunde müßte ein solcher Reaktor eine Rohrlänge von mehreren tausend Meter aufweisen.

Aus der DE 43 33 468 A 1 ist es bekannt, zur Behandlung von biogenen Restmassen eine temperaturaktivierte Flüssigphasenhydrolyse in einem beheizbaren Rohr- oder Kaskaden-Rührwerksreaktor durchzuführen. Die Abdichtung der Rührwerkswellen solcher Reaktoren ist bei einem - üblicherweise unter hohem Druck stattfindenden - Betrieb problematisch.

Aufgabe der vorliegenden Erfindung ist es, ein Verfahren und eine Vorrichtung bereitzustellen, mit denen die Nachteile des Stands der Technik beseitigt werden. Insbesondere soll eine Vereinfachung des Reaktors und ein erhöhter Durchsatz erzielt werden.

Diese Aufgabe wird durch die Merkmale der Ansprüche 1 und 19 gelöst. Vorteilhafte Ausgestaltungen ergeben sich aus den Ansprüchen 2 bis 18 und 20 bis 36.

Nach Maßgabe der verfahrensseitigen Lösung ist vorgesehen, daß die Temperatur-Druck-Hydrolyse in einem zylindrischen Reaktor durchgeführt wird, in dem die zu behandelnde Restmasse in einem radial innenliegenden Zylinderabschnitt axial in eine erste Richtung und in einem radial außenliegenden Abschnitt axial in eine zweite Richtung strömt, wobei die zweite Richtung der ersten Richtung entgegengesetzt ist. Das ermöglicht eine kontinuierliche Verfahrensführung mit einem hohen Durchsatz. Unter Verwendung des erfindungsgemäßen Verfahrens sind Reaktoren geringer Baugröße realisierbar, die einfach aufgebaut und wartungsfreundlich sind.

Vorteilhafterweise ist die erste Richtung gegen eine Überströmöffnung und die zweite Richtung gegen eine Aufgabeöffnung gerichtet. An der Aufgabeöffnung wird zweckmäßigerweise ein die Strömung im Reaktor aufrechterhaltender Triebstrahl erzeugt. Das Vorsehen von Rührwerken ist bei einem nach dem erfindungsgemäßen Verfahren arbeitenden Reaktor nicht erforderlich. Die bei der Verwendung von Rührwerken auftretenden Dichtungsprobleme können vermieden werden.

Die Mantelfläche des Reaktors, der als Schlaufenreaktor ausgeführt sein kann, wird vorteilhafterweise beheizt. Dazu kann sie mit einem heißen Medium, insbesondere Öl, umströmt werden.

Die Strömungsverhältnisse im Reaktor können außer durch den Impuiseintrag des Triebstrahls mittels eines in einem axialen Bypass eingeschalteten Regelmittels gesteuert werden. Dabei kann es sich zweckmäßigerweise um eine Pumpe handeln.

Nach der vorrichtungsseitigen Lösung ist vorgesehen, daß die Temperatur-Druck-Hydrolyse in einem zylindrischen Reaktor stattfindet, in dem die zu behandelnde Restmasse in einem radial innenliegenden Zylinderabschnitt axial in eine erste Richtung und in einem radial außenliegenden Abschnitt axial in eine zweite Richtung strömt. Die erfindungsgemäße Vorrichtung ist einfach aufgebaut und wartungsfreundlich. Sie erlaubt einen hohen Durchsatz.

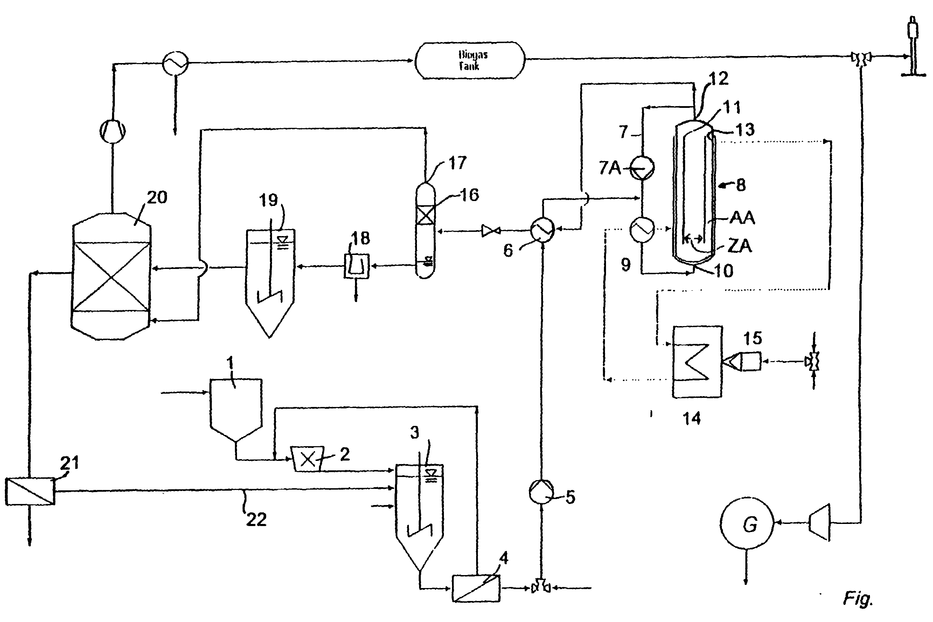

Nachfolgend wird anhand der einzigen Zeichnung ein Ausführungsbeispiel einer zur Durchführung des erfindungsgemäßen Verfahrens geeigneten Vorrichtung näher erläutert.

Die Zeichnung zeigt ein schematisches Blockschaltbild.

Biogene Restmasse wird in einem Bioabfall-Behälter 1 gesammelt. Sie wird von da aus einem Mazerator bzw. Shredder 2 zugeführt. Im Shredder 2 wird die Restmasse auf Partikelgrößen von 10 bis 20 mm zerkleinert. Die zerkleinerte Restmasse gelangt dann in einen Anmaischbehälter 3. Dort wird die Restmasse mit Flüssigkeit, bspw. im Verhältnis 1:10, zur Herstellung einer Suspension verrührt. Ein dem Anmaischbehälter 3 nachgeschalteter Grobfilter 4 dient zur Abtrennung unerwünscht großer Partikel. Diese werden zum Shredder 2 zurückgeführt.

Die Suspension wird sodann mittels einer Hochdruckpumpe 5 über einen ersten Wärmetauscher 6 auf einen Bypass 7 geleitet. Der erste Wärmetauscher 6 wird von heißer Suspension durchströmt, welche einen Reaktor 8 verlassen hat. Die vorerwärmte Suspension durchstömt einen im Bypass 7 eingeschalteten zweiten Wärmetauscher 9, der von heißem Thermoöl durchströmt wird. Von da gelangt die erwärmte Suspension via einer in einer Aufgabeöffnung 10 vorgesehenen Düse (hier nicht dargestellt) unter gleichzeitiger Bildung eines Triebstrahls in den Reaktor 8. Dabei handelt es sich um einen Schlaufenreaktor. Im Inneren des zylindrisch ausgebildeten Reaktorbehälters befindet sich in koaxialer Anordnung ein Rohr 11. Das Rohr 11 begrenzt einen radial innenliegenden Zylinderabschnitt ZA. In diesem Zylinderabschnitt ZA strömt die Suspension axial in Richtung einer Überströmöffnung 12. Der Überströmöffnung 12 kann ein sich senkrecht zur axialen Strömungsrichtung erstreckendes Prallblech (hier nicht gezeigt) vorgelagert sein. Im Bereich des Reaktorkopfs wird die Strömung um 180° nach außen umgelenkt. Die Suspension strömt dann in einem radial außenliegenden Abschnitt AA, nämlich zwischen dem Rohr 11 und der Mantelfläche 13 des Behälters, axial in Richtung der Aufgabeöffnung 10. In der Nähe der Aufgabeöffnung 10 wird die Strömung um 180° nach innen umgelenkt; die Suspension wird wiederum dem Zylinderabschnitt ZA zugeführt. Durch die Überströmöffnung 12 entweicht kontinuierlich die Menge an Suspension, die dem Reaktor 8 durch die Aufgabeöffnung 10 zugeführt wird. Die Strömungsverhältnisse im Reaktor 8, insbesondere die Geschwindigkeit der koaxialen Umwälzung der Suspension, können durch eine im Bypass 7 eingeschaltete Pumpe 7A beeinflußt werden.

Der Mantel des Reaktors 8 ist weitgehend doppelwandig ausgebildet. Im durch die Doppelwand gebildeten Zwischenraum strömt zur Beheizung der Mantelfläche 13 heißes Thermalöl. Das Thermalöl wird in einem Thermalölerhitzer 14 mittels eines Brenners 15 oder elektrisch erhitzt. Es wird im Kreislauf über den zweiten Wärmetauscher 9 und die Mantelfläche 13 geführt.

Die Temperatur-Druck-Hydrolyse wird im Reaktor 8 bei einer Temperatur von maximal 250°C durchgeführt. Der Druck liegt dabei so weit über dem Dampfdruck der Suspension, daß die flüssige Phase aufrechterhalten bleibt.

Die den Reaktor 8 durch die Überströmöffnung verlassende Suspension gelangt über den ersten Wärmetauscher 6 in eine Strippkolonne 16. Dort wird der Druck auf etwa 1,5 bar entspannt. Hydrolysegas wird mittels einer Einrichtung 17 zum Abziehen von Hydrolysegas abgezogen. Der in der Suspension verbleibende Feststoff kann in einem optional vorgesehenen Dekanter 18 abgetrennt werden. Die Suspension bzw. die Flüssigkeit wird sodann einem Vorlagebehälter 19 und von da einem Fermenter 20 zugeführt. Im Fermenter 20 werden die organischen Restsubstanzen unter Einwirkung anaerober Mikroorganismen unter Bildung von Biogas weiter abgebaut. Das entstehende Trübwasser kann zur Herstellung neuer Suspension dem Anmaischbehälter 3 über eine Verbindungsleitung 22 zugeführt oder als Endprodukt dem Prozeß entzogen werden. Sofern es dem Prozeß entzogen wird, besteht die Möglichkeit, mittels eines statischen Eindickers 21 den Feststoffgehalt im Trübwasser weiter zu reduzieren.

### Bezugszeichenliste

- 1: Bioabfall-Behälter
- 2: Shredder
- 3: Anmaischbehälter
- 4: Grobfilter
- 5: Hochdruckpumpe
- 6: erster Wärmetauscher
- 7: Bypass
- 7A: Pumpe
- 8: Reaktor
- 9: zweiter Wärmetauscher
- 10: Aufgabeöffnung
- 11: Rohr
- 12: Überströmöffnung
- 13: Mantelfläche
- 14: Thermalölerhitzer
- 15: Brenner
- 16: Strippkolonne
- 17: Einrichtung zum Abziehen von Hydrolysegas
- 18: Dekanter
- 19: Vorlagebehälter
- 20: Fermenter
- 21: statischer Eindicker
- 22: Verbindungsleitung

- ZA: Zylinderabschnitt
- AA: radial außenliegender Abschnitt

## Patentansprüche

1. Verfahren zur Behandlung biogener Restmassen, insbesondere Kantinenabfällen, Fleischabfällen, Klärschlämmen, organischen Industriebafällen, wobei die Restmasse in einem zylindrischen Reaktor (8) einer Temperatur-Druck-Hydrolyse (TDH) unterzogen wird, **dadurch gekennzeichnet,** daß die Restmasse in einem radial innenliegenden Zylinderabschnitt (ZA) axial in eine erste Richtung und in einem radial außenliegenden Abschnitt (AA) axial in eine zweite Richtung strömt, wobei die zweite Richtung der ersten Richtung entgegengesetzt ist.

2. Verfahren nach Anspruch 1, wobei die erste Richtung gegen eine Überströmöffnung (12) und die zweite Richtung gegen eine Aufgabeöffnung (10) gerichtet ist.

3. Verfahren nach Anspruch 2, wobei an der Aufgabeöffnung (10) ein die Strömung im Reaktor (8) aufrechterhaltender Triebstrahl erzeugt wird.

4. Verfahren nach einem der vorhergehenden Ansprüche, wobei als Reaktor (8) ein Schlaufenreaktor verwendet wird.

5. Verfahren nach einem der vorhergehenden Ansprüche, wobei die Mantelfläche (13) des Reaktors (8) beheizt wird.

6. Verfahren nach Anspruch 5, wobei die Mantelfläche (13) zum Beheizen mit einem heißen Medium, insbesondere Öl, umströmt wird.

7. Verfahren nach einem der vorhergehenden Ansprüche, wobei die Strömungsverhältnisse im Reaktor (8) mittels eines in einen axialen Bypass (7) eingeschalteten Regelmittels beeinflußt werden.

8. Verfahren nach Anspruch 7, wobei das Regelmittel eine Pumpe (7A) ist.

9. Verfahren nach einem der vorhergehenden Ansprüche, wobei die Restmasse vor der Temperatur-Druck-Hydrolyse (TDH) auf Patrikelgrößen von 10 - 50 mm zerkleinert wird.

10. Verfahren nach einem der vorhergehenden Ansprüche, wobei die Restmasse in Flüssigkeit suspendiert wird.

11. Verfahren nach Anspruch 10, wobei die Suspension auf höchstens 15% Trockensubstanz eingestellt wird.

12. Verfahren nach einem der vorhergehenden Ansprüche, wobei die Suspension vor dem Eintritt in den Reaktor (8) erwärmt wird.

13. Verfahren nach einem der vorhergehenden Ansprüche, wobei vor dem Eintritt in den Reaktor (8) Fettphasen aus der Suspension abgeschieden werden.

14. Verfahren nach einem der vorhergehenden Ansprüche, wobei der Druck nach der Temperatur-Druck-Hydrolyse in einer Strippkolonne (16) entspannt wird.

15. Verfahren nach Anspruch 14, wobei in der Strippkolonne (16) Hydrolysegas abgezogen wird.

16. Verfahren nach einem der vorhergehenden Ansprüche, wobei aus der Strippkolonne (16) abgezogene Suspension unter Einwirkung anaerober Mikroorganismen unter Bildung von Biogas umgesetzt wird.

17. Verfahren nach Anspruch 16, wobei bei der Umsetzung entstehendes Biogas als Energieträger zur Erwärmung der Suspension und/oder zum Beheizen des Reaktors (8) verwendet wird.

18. Verfahren nach Anspruch 16, wobei bei der Umsetzung gebildetes Wasser zur Herstellung der Suspension verwendet wird.

## Claims

1. Process for treating biogenic residues, in particular canteen wastes, meat wastes, sewage sludges, organic industrial wastes, the residue being subjected to a temperature-pressure hydrolysis (TPH) in a cylindrical reactor (8), characterized in that the residue flows axially in a first direction in a radially inner cylinder section (ZA) and flows axially in a second direction in a radially outer section (AA), the second direction being in the opposite direction to the first direction.

2. Process according to claim 1, wherein the first direction is directed toward an overflow port (12) and the second direction is directed toward a feed port (10).

3. Process according to claim 2, wherein a motive jet maintaining the flow in the reactor (8) is generated at the feed port (10).

4. Process according to one of the preceding claims, wherein the reactor (8) used is a loop reactor.

5. Process according to one of the preceding claims, wherein the shell surface (13) of the reactor (8) is heated.

6. Process according to claim 5, wherein a hot medium, in particular oil, flows around the shell surface (13) for heating.

7. Process according to one of the preceding claims, wherein the flow conditions in the reactor (8) are influenced by means of a controlling means connected in an axial bypass (7).

8. Process according to claim 7, wherein the controlling means is a pump (7A).

9. Process according to one of the preceding claims, wherein the residue is comminuted to particle sizes of 10-50 mm prior to the temperature-pressure hydrolysis (TPH).

10. Process according to one of the preceding claims, wherein the residue is suspended in liquid.

11. Process according to claim 10, wherein the suspension is set to a maximum of 15% dry matter.

12. Process according to one of the preceding claims, wherein the suspension is heated prior to entry into the reactor (8).

13. Process according to one of the preceding claims, wherein, prior to entry into the reactor (8), fat phases from the suspension are separated off.

14. Process according to one of the preceding claims, wherein the pressure downstream of the temperature-pressure hydrolysis is reduced in a stripping column (16).

15. Process according to claim 14, wherein hydrolysis gas is taken off in the stripping column (16).

16. Process according to one of the preceding claims, wherein suspension taken off from the stripping column (16) is reacted with the formation of biogas under the action of anaerobic microorganisms.

17. Process according to claim 16, wherein biogas formed in the reaction is used as energy carrier for heating the suspension and/or for heating the reactor (8).

18. Process according to claim 16, wherein water formed in the reaction is used for producing the suspension.

## Revendications

1. Procédé pour le traitement de matières résiduelles biogènes, en particulier de déchets de cantine, de déchets de viande, de boues de curage, de déchets industriels organiques, dans lequel la matière résiduelle est soumise, dans un réacteur cylindrique (8), à une hydrolyse en température et pression (TDH), caractérisé en ce que la matière résiduelle passe axialement selon une première direction dans un segment de cylindre radial interne (ZA), et axialement selon une seconde direction dans un segment radial externe (AA), la seconde direction étant opposée à la première direction.

2. Procédé selon la revendication 1, dans lequel la première direction est orientée vers une ouverture de trop-plein (12), et la seconde direction est orientée vers une ouverture d'alimentation (10).

3. Procédé selon la revendication 2, dans lequel un jet moteur qui maintient l'écoulement dans le réacteur (8) est généré au niveau de l'ouverture d'alimentation (10).

4. Procédé selon l'une des revendications précédentes, dans lequel on utilise un bioréacteur à boucle en tant que réacteur (8).

5. Procédé selon l'une des revendications précédentes, dans lequel la surface de l'habillage (13) du réacteur (8) est chauffée.

6. Procédé selon la revendication 5, dans lequel la surface de l'habillage (13) est parcourue, pour le chauffage, par un milieu chaud, en particulier de l'huile.

7. Procédé selon l'une des revendications précédentes, dans lequel les rapports d'écoulement dans le réacteur (8) sont influencés par un dispositif de régulation interposé dans une dérivation axiale (7).

8. Procédé selon la revendication 7, dans lequel le dispositif de régulation est une pompe (7A).

9. Procédé selon l'une des revendications précédentes, dans lequel la matière résiduelle est broyée avant l'hydrolyse en température et pression (TDH) à une taille de particules comprise entre 10 et 50 mm.

10. Procédé selon l'une des revendications précédentes, dans lequel la matière résiduelle est mise en suspension dans un liquide.

11. Procédé selon la revendication 10, dans lequel la suspension est réglée à 15 % de substance sèche au plus.

12. Procédé selon l'une des revendications précédentes, dans lequel la suspension est chauffée avant l'introduction dans le réacteur (8).

13. Procédé selon l'une des revendications précédentes, dans lequel les phases grasses issues de la suspension sont séparées avant l'introduction dans le réacteur (8).

14. Procédé selon l'une des revendications précédentes, dans lequel la pression est déchargée après l'hydrolyse en température et pression (TDH) dans une colonne de fractionnement (16).

15. Procédé selon la revendication 14, dans lequel le gaz d'hydrolyse est soutiré dans la colonne de fractionnement (16).

16. Procédé selon l'une des revendications précédentes, dans lequel la suspension soutirée de la colonne de fractionnement (16) est convertie sous l'action de micro-organismes anaérobies pour former du biogaz.

17. Procédé selon la revendication 16, dans lequel le biogaz généré lors de la conversion est utilisé en tant que source d'énergie pour chauffer la suspension et/ou chauffer le réacteur (8).

18. Procédé selon la revendication 16, dans lequel l'eau formée lors de la conversion est utilisée pour préparer la suspension.
